# EUROPÄISCHE PATENTSCHRIFT

(11) **EP 2 776 718 B1**
(45) Veröffentlichungstag und Bekanntmachung des Hinweises auf die Patenterteilung: **16.09.2015**
(21) Anmeldenummer: 12775619.5
(22) Anmeldetag: 08.10.2012
(51) Int. Cl.: F04D 5/00, F04D 29/58, F16J 15/34

(54) **GLEITRINGDICHTUNGSANORDNUNG MIT TESLA-PUMPE**
SLIDE RING SEAL ARRANGEMENT WITH TESLA PUMP
SYSTÈME D'ÉTANCHÉITÉ À BAGUE GLISSANTE POURVU D'UNE POMPE TESLA

(30) Priorität: 10.11.2011 DE 102011118294
(43) Veröffentlichungstag der Anmeldung: 17.09.2014
(73) Patentinhaber: EagleBurgmann Germany GmbH & Co. KG, 82515 Wolfratshausen (DE)
(72) Erfinder: LEDIG, Stefan, 82515 Wolfratshausen (DE); BOEHM, Thomas, 82067 Zell (DE); KOLLINGER, Rudolf, 82549 Königsdorf (DE)
(74) Vertreter: Hoefer & Partner Patentanwälte mbB
(86) Internationale Anmeldenummer: PCT/EP2012/004207
(87) Internationale Veröffentlichungsnummer: WO 2013/068066

(56) Entgegenhaltungen:
- DE-U- 6 910 639
- US-A- 3 888 495

## Beschreibung

Die vorliegende Erfindung betrifft eine Gleitringdichtungsanordnung, umfassend wenigstens eine Gleitringdichtung und eine Tesla-Pumpe.

Gleitringdichtungsanordnungen sind aus dem Stand der Technik in unterschiedlichen Ausgestaltungen bekannt. Im Betrieb können dabei an der Gleitringdichtung relativ hohe Temperaturen auftreten, welche einerseits durch eine hohe Temperatur eines abzudichtenden Mediums oder durch die im normalen Betrieb entstehenden Reib- und Verwirbelungsleistungen an der Gleitringdichtung verursacht werden können. Um Beschädigungen an der Gleitringdichtung zu vermeiden, muss daher Wärme abgeführt werden. Hierzu kann das abzudichtende Medium verwendet werden, wenn dieses nicht zu hohe Temperaturen aufweist, oder alternativ ein Sperrmedium. Zur Zirkulation des zur Wärmeabfuhr verwendeten Mediums werden üblicherweise externe Pumpen verwendet. Weiterhin ist es bekannt, sog. Pumpringe zur Mediumszirkulation vorzusehen, welche jedoch üblicherweise nur eine geringe Förderleistung bereitstellen können.

Ferner ist aus der DE 691 06 39 U und der US 3,888,495 eine Ringdichtungsanordnung mit den Merkmalen des Oberbegriffs des Anspruchs 1 bekannt.

Es ist daher Aufgabe der vorliegenden Erfindung, eine Gleitringdichtungsanordnung bereitzustellen, welche bei einfachem, kostengünstigen Aufbau eine verbesserte Zirkulation eines Mediums im Bereich der Gleitringe ermöglicht und trotzdem einen sehr kompakten Aufbau aufweist.

Diese Aufgabe wird durch eine Gleitringdichtungsanordnung mit den Merkmalen des Anspruches 1 gelöst. Die Unteransprüche betreffen bevorzugte Ausführungsformen der Erfindung.

Die erfindungsgemäße Gleitringdichtungsanordnung mit den Merkmalen des Anspruches 1 weist den Vorteil auf, dass eine erhöhte Förderleistung eines Sperr- und / oder Kühlmediums möglich ist, ohne dass ein Bauraum wesentlich vergrößert werden muss. Dies wird erfindungsgemäß dadurch erreicht, dass die Gleitringdichtungsanordnung eine Tesla-Pumpe umfasst. Die Tesla-Pumpe umfasst mehrere radial nach außen verlaufende Scheiben, welche auf einem zylindrischen Basisbereich angeordnet sind. Die Scheiben weisen dabei zueinander einen definierten Abstand auf, so dass das Medium, welches zwischen die Scheiben eindringt, durch Rotation der Scheiben zum äußeren Umfang der Scheiben transportiert wird und dort aus der Tesla-Pumpe austritt. Die Tesla-Pumpe zeigt einen einfachen und robusten Aufbau und ermöglicht eine hohe Förderleistung bei langer Lebensdauer. Die Tesla-Pumpe weist eine stabile Kennlinie auf und hat nur eine sehr geringe Kavitationsgefahr.

Vorzugsweise umfasst die Gleitringdichtungsanordnung ferner eine zusätzliche Fördervorrichtung, welche der Tesla-Pumpe vorgeschaltet ist. Die zusätzliche Fördervorrichtung umfasst vorzugsweise ein Fördergewinde, welches gemeinsam mit der Tesla-Pumpe rotiert. Hierdurch wird insbesondere eine Zuströmung des Mediums zur Tesla-Pumpe verbessert, so dass die Pumpleistung der Tesla-Pumpe erhöht wird. Besonders bevorzugt weist das Fördergewinde dabei schräge Fördernuten auf, welche zu einer axialen Richtung der Gleitringdichtungsanordnung schräg gestellt sind. Die schrägen Fördernuten weisen insbesondere den Vorteil auf, dass das zu fördernde Medium eine Strömungskomponente in Umfangsrichtung erfährt, so dass das Medium strömungsgünstiger zwischen die Scheiben der Tesla-Pumpe eingebracht wird. Hierdurch kann insbesondere der Wirkungsgrad der Tesla-Pumpe verbessert werden.

Die Tesla-Pumpe umfasst vorzugsweise eine Vielzahl von Scheiben und einen zylindrischen Basisbereich, wobei die Scheiben vom zylindrischen Basisbereich radial nach außen verlaufen. Vorzugsweise weist wenigstens eine der Scheiben mindestens eine Axialöffnung auf, die bevorzugt benachbart zum Basisbereich liegt. Vorzugsweise weisen alle Scheiben außer einer Endscheibe, welche an einem axialen Ende der Tesla-Pumpe angeordnet ist, wenigstens eine Axialöffnung auf. Besonders bevorzugt ist dabei eine Vielzahl von Axialöffnungen in den Scheiben vorgesehen, welche weiter bevorzugt entlang des Umfangs gleich verteilt sind. Durch die Axialöffnungen in den Scheiben wird erreicht, dass das Medium nahe dem zylindrischen Basisbereich der Tesla-Pumpe in den Bereich zwischen den Scheiben der Tesla-Pumpe einströmt und dann durch die Tesla-Pumpe spiralförmig nach außen gefördert werden kann. Die Axialöffnungen verbessern somit weiter den Wirkungsgrad der Pumpe. Dabei sind besonders bevorzugt Axialöffnungen an einander benachbarten Scheiben der Tesla-Pumpe an gleichen Umfangspositionen angeordnet. Hierdurch wird sichergestellt, dass das Medium bis zur Endscheibe, welche keine Axialöffnung aufweist, geführt wird. Dabei kann der Wirkungsgrad weiter verbessert werden.

Gemäß einer alternativen Ausgestaltung der vorliegenden Erfindung weisen alle Scheiben der Tesla-Pumpe vorzugsweise wenigstens eine Axialöffnung auf. Dabei ist eine Axialöffnung in einer Endscheibe, welche an einem axialen Ende der Tesla-Pumpe angeordnet ist, mit einem kleineren Durchtrittsquerschnitt versehen als die anderen Axialöffnungen in den anderen Scheiben. Hierdurch wird eine Strömung durch alle Scheiben der Tesla-Pumpe hindurch ermöglicht, so dass sichergestellt wird, dass einerseits das Medium zu allen Zwischenräumen zwischen den Scheiben transportiert werden kann und ferner auch das Medium in einen Bereich in Strömungsrichtung hinter der Tesla-Pumpe transportiert werden kann, um dort eine Kühlung der Bauteile, insbesondere der Gleitringe, zu ermöglichen.

Die geometrische Form der Axialöffnungen kann beliebig gewählt werden, ist bevorzugt jedoch zylindrisch oder als Langloch, insbesondere bogenförmiges oder gerades Langloch, vorgesehen. Weiter bevorzugt sind die Axialöffnungen am Fuß der Scheiben der Tesla-Pumpe vorgesehen und weiter bevorzugt jeweils in Reihe hintereinander angeordnet, um eine gute Durchströmung mit möglichst geringen Verlusten sicherzustellen. Vorzugsweise sind mehrere Axialöffnungen entlang des Umfangs der Scheiben gleich verteilt.

Weiter bevorzugt weisen die Scheiben der Tesla-Pumpe an wenigstens einer Flachseite Förderstrukturen auf. Die Förderstrukturen können beispielsweise bogenförmig angeordnete, von der Flachseite der Scheibe vorstehende Elemente sein oder geradlinig radial verlaufende, vorstehende Elemente. Die Förderstrukturen an der Scheibe unterstützen dabei die Förderung des Mediums, wobei eine Höhe der Förderstrukturen, ausgehend von der Flachseite, so gewählt ist, dass die Förderung der Tesla-Pumpe zusätzlich unterstützt wird. Alternativ sind an beiden Flachseiten der Scheiben Förderstrukturen vorgesehen, so dass Förderstrukturen von beiden Seiten in den Spalt zwischen den Scheiben vorstehen.

Um zu erreichen, dass das zu fördernde Medium besser zwischen die Scheiben der Tesla-Pumpe gelangen kann, erweitert sich ein Außenumfang der Tesla-Pumpe kontinuierlich, insbesondere konisch. Hierdurch wird eine Tesla-Pumpe mit im Wesentlichen konischer Hüllform gebildet, welche eine verbesserte Förderung sicherstellen kann. Besonders bevorzugt sind die Scheiben dabei spiralförmig am zylindrischen Basisbereich angeordnet. Alternativ sind die Scheiben parallel zueinander angeordnet und weisen unterschiedliche Außendurchmesser auf. Dabei nehmen die Außendurchmesser der Scheiben in axialer Richtung zu. Die Größen der Scheiben nehmen dabei in Axialrichtung vorzugsweise gleichmäßig zu, so dass eine konische Außenhülle an der Tesla-Pumpe erhalten wird.

Weiter bevorzugt ist der zylindrische Basisbereich als Hohlzylinder ausgebildet und im hohlzylindrischen Basisbereich ist wenigstens eine Durchtrittsöffnung vorgesehen, welche eine Verbindung zu einem Raum innerhalb des Hohlzylinders ermöglicht. Der Raum innerhalb des Hohlzylinders ist vorzugsweise bis zu den Gleitringen geführt, so dass eine Strömung vom Medium durch die Durchtrittsöffnung bis zu den Gleitringen ermöglicht wird, um eine verbesserte Kühlung im Bereich der Gleitringe zu ermöglichen. Die Durchtrittsöffnung ist vorzugsweise als eine oder mehrere entlang des Umfangs des Hohlzylinders angeordnete radiale Bohrungen vorgesehen.

Für einen besonders kompakten Aufbau ist das Fördergewinde der zusätzlichen zweiten Fördereinrichtung vorzugsweise an einer Außenseite einer Buchse angeordnet. Weiter bevorzugt ist die Buchse im Bereich des Fördergewindes an einer Drehhülse angeordnet, und die Tesla-Pumpe ist an einem Hohlwellenbereich der Buchse benachbart zu einem Befestigungsbereich angeordnet.

Weiter bevorzugt ist eine Abströmbohrung für das zu fördernde Medium radial außerhalb der Tesla-Pumpe angeordnet.

Weiter bevorzugt umfasst die Gleitringdichtungsanordnung eine zweite Gleitringdichtung, wobei die Tesla-Pumpe in axialer Richtung zwischen einem Dichtspalt der ersten und einem Dichtspalt der zweiten Gleitringdichtung angeordnet ist. Somit wird ein besonders kompakter Aufbau einer doppelt wirkenden Gleitringdichtungsanordnung sichergestellt.

Vorzugsweise ist die Tesla-Pumpe Teil einer Kühleinrichtung zur Kühlung der Gleitringe und/oder anderer Bauteile der Gleitringdichtungsanordnung.

Insbesondere wenn ein sehr zähes Kühlmedium verwendet wird, beispielsweise zur Kühlung von Hochtemperatur belasteten Gleitringdichtungsanordnungen, kann die erfindungsgemäße Anordnung mit Tesla-Pumpe eine Förderwirkung gegenüber den bisher verwendeten Fördereinrichtungen signifikant verbessern.

Nachfolgend werden unter Bezugnahme auf die begleitende Zeichnung Ausführungsbeispiele der Erfindung im Detail beschrieben. In der Zeichnung ist:
- Fig. 1: eine schematische Schnittansicht einer Gleitringdichtungsanordnung gemäß einem ersten Ausführungsbeispiel der Erfindung,
- Fig. 2: eine schematische Seitenansicht einer Tesla-Pumpe und eines Fördergewindes von Fig. 1,
- Fig. 3: eine schematische, perspektivische Ansicht von Fig. 2,
- Fig.4: eine schematische Seitenansicht einer Gleitringdichtungsanordnung gemäß einem zweiten Ausführungsbeispiel der Erfindung,
- Fig. 5: eine schematische Seitenansicht einer Tesla-Pumpe und eines Fördergewindes von Fig. 4,
- Fig. 6: eine schematische, perspektivische Ansicht von Fig. 5, und
- Fig. 7: eine schematische Schnittansicht einer Gleitringdichtungsanordnung gemäß einem dritten Ausführungsbeispiel der Erfindung,
- Fig. 8: eine schematische Schnittansicht einer Gleitringdichtungsanordnung gemäß einem vierten Ausführungsbeispiel der Erfindung,
- Fig. 9: eine schematische, perspektivische Ansicht einer Tesla-Pumpe und eines Fördergewindes gemäß einem fünften Ausführungsbeispiel,
- Fig. 10: eine schematische, perspektivische Ansicht einer Gleitringdichtungsanordnung gemäß einem sechsten Ausführungsbeispiel der Erfindung, und
- Fig. 11 und 12: Darstellungen von Scheiben einer Tesla-Pumpe mit Förderstrukturen.

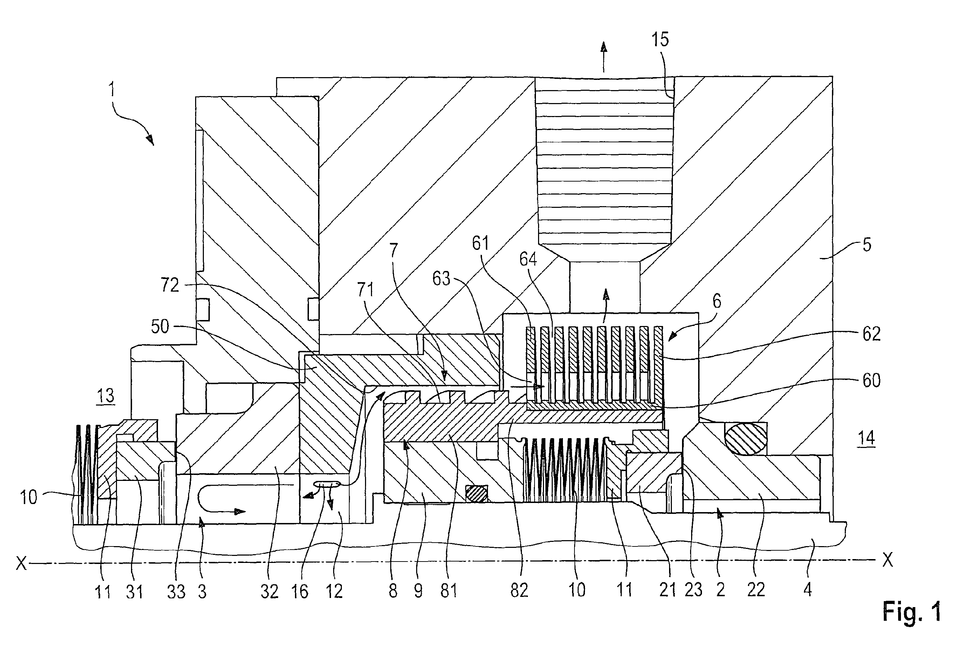

In den Fig. 1 bis 3 ist eine Gleitringdichtungsanordnung 1 gemäß dem ersten Ausführungsbeispiel der Erfindung im Detail gezeigt.

Die Gleitringdichtungsanordnung 1 umfasst eine erste Gleitringdichtung 2 und zweite Gleitringdichtung 3. Die erste Gleitringdichtung 2 umfasst einen rotierenden Gleitring 21 und einen stationären Gleitring 22, wobei die beiden Gleitringe zwischen sich einen Dichtspalt 23 definieren. Die zweite Gleitringdichtung 3 umfasst einen rotierenden Gleitring 31 und einen stationären Gleitring 32, wobei die beiden Gleitringe ebenfalls einen Dichtspalt 33 zwischen sich definieren. Somit umfasst die Gleitringdichtungsanordnung gemäß dem ersten Ausführungsbeispiel eine doppelt wirkende Gleitringdichtung.

Die rotierenden Gleitringe 21, 31 sind jeweils über einen Haltering 11 mit einem rotierenden Bauteil 4, in diesem Ausführungsbeispiel eine rotierende Welle, verbunden. Weiterhin umfasst jede der beiden Gleitringdichtungen 2, 3 als Befederungseinrichtung einen Metallbalg 10. Wie aus Fig. 1 ersichtlich ist, ist der Metallbalg 10 an einer Drehhülse 9 fixiert, welche gemeinsam mit dem rotierenden Bauteil 4 umläuft. Die stationären Gleitringe 22, 32 sind direkt oder indirekt mit einem Gehäuse 5 verbunden.

Die erfindungsgemäße Gleitringdichtungsanordnung 1 dichtet dabei eine Produktseite 13 von einer Atmosphärenseite 14 ab.

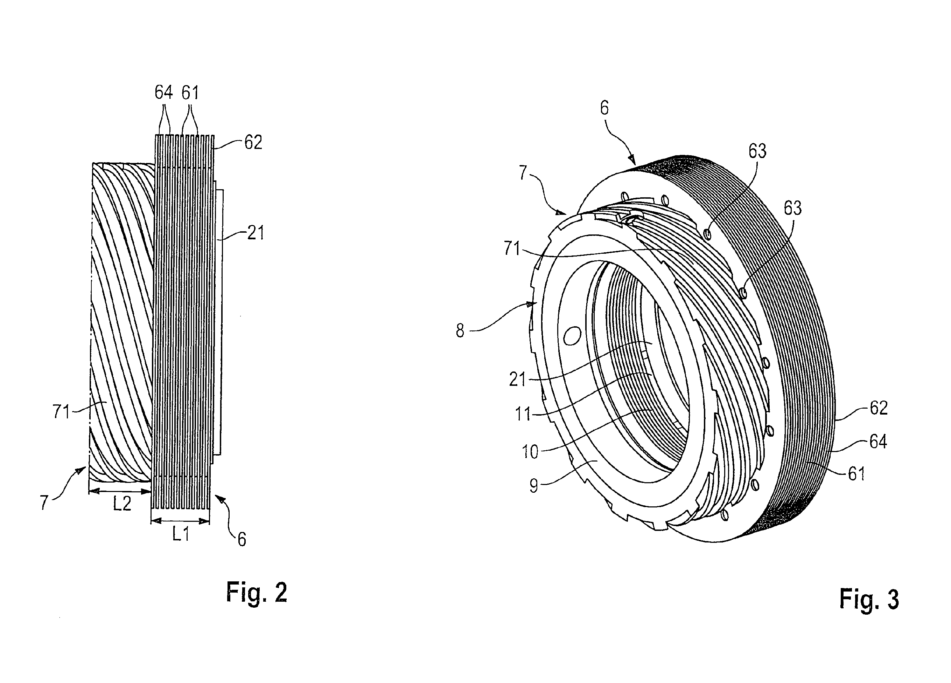

Ferner umfasst die erfindungsgemäße Gleitringdichtungsanordnung 1 eine Tesla-Pumpe 6 und als zweite Fördervorrichtung ein Fördergewinde 7. Das Fördergewinde 7 und die Tesla-Pumpe sind auf einer Buchse 8 angeordnet, welche an der Drehhülse 9 fixiert ist. Die Tesla-Pumpe 6 umfasst eine Vielzahl von parallelen Scheiben 61, welche jeweils eine Axialöffnung 63 aufweisen. Die Axialöffnungen 63 sind dabei zylindrisch und gleich verteilt entlang des Umfanges der Scheiben 61 angeordnet (vgl. Fig. 3) und benachbart zu einem zylindrischen Basisbereich 60 der Tesla-Pumpe vorgesehen. Dabei weist eine Endscheibe 62, welche an einem axialen Ende der Tesla-Pumpe 6 angeordnet ist, keine Axialöffnung auf. Die Scheiben 61 und die Endscheibe 62 sind dabei derart angeordnet, dass konstante Zwischenräume 64 zwischen den Scheiben vorhanden sind, wobei eine Breite der Scheiben 61 gleich einer Breite der Zwischenräume 64 ist.

Das Fördergewinde 7 umfasst eine Vielzahl von Nuten 71, welche schräg in Richtung einer Axialrichtung X-X der Gleitringdichtungsanordnung angeordnet sind. Ein stationärer Teil 72 des Fördergewindes 7 ist durch eine glatte Mantelfläche eines stationären Bauteiles 50 bereitgestellt. Somit handelt es sich bei dem gezeigten Fördergewinde 7 um ein rotierendes Fördergewinde. Alternativ kann auch ein stationäres Fördergewinde vorgesehen sein, bei dem die Fördernuten im stationären Bauteil die glatte Mantelfläche am rotierenden Bauteil vorgesehen ist. Weiter alternativ kann auch ein gegenläufiges Fördergewinde vorgesehen sein, bei dem sowohl Nuten im rotierenden Bauteil als auch im stationären Bauteil in gegenläufiger Anordnung vorgesehen sind.

Über eine Zuströmbohrung 16 wird ein Kühlmedium in einen Zwischenraum 12 zwischen dem rotierenden Bauteil 4 und dem Gehäuse 5 zugeführt. Das Kühlmedium wird dabei, wie durch die Pfeile angedeutet, vom Zwischenraum 12 durch das Fördergewinde 7 in Richtung zur Tesla-Pumpe 6 gefördert. An der Tesla-Pumpe 6 strömt das Kühlmedium in die Axialöffnungen 63 der Tesla-Pumpe und wird durch die rotierenden Scheiben spiralförmig in radialer Richtung zur Außenseite und zu einer Abströmbohrung 15 transportiert. Wie insbesondere aus Fig. 3 ersichtlich ist, wird das Kühlmedium dabei durch die Nuten 71 des Fördergehäuses mit einer Strömungskomponente in Umfangsrichtung beaufschlagt, so dass das Kühlmedium strömungsgünstig mit reduziertem Strömungswiderstand in die Axialöffnungen 63 der Tesla-Pumpe 6 eintritt. Da das Fördergewinde 7 und die Tesla-Pumpe 6 auf der gleichen Buchse 8 gemeinsam mit dem rotierenden Bauteil 4 rotieren, ergibt sich ein problemloser Eintritt des Kühlmediums in die Tesla-Pumpe. Da die Zwischenräume 64 eine definierte Breite zwischen den Scheiben 61 aufweisen, wird durch Adhäsionskräfte Energie von den Scheiben auf das Kühlmedium übertragen und das Kühlmedium spiralförmig radial zur Außenseite der Tesla-Pumpe gefördert. Vorzugsweise ist ein Kühlmedium dabei derart gewählt, dass es eine relativ hohe Viskosität aufweist. Das Kühlmedium ist beispielsweise Öl. Die hohe Viskosität des Kühlmediums verbessert dabei insbesondere den Wirkungsgrad der Tesla-Pumpe 6.

Somit ist beim ersten Ausführungsbeispiel das Fördergewinde 7 in Strömungsrichtung der Tesla-Pumpe 6 vorgeschaltet und übernimmt neben der eigenen Förderleistung des Fördergewindes 7 noch eine Leitfunktion für das Kühlmedium, so dass dieses leichter in die Zwischenräume 64 der Tesla-Pumpe einströmen kann, ohne dass dabei die sich bildenden Grenzschichten des Mediums zu stark gestört werden. Damit die Tesla-Pumpe 6 möglichst wenig Masse aufweist, ist die Tesla-Pumpe 6 auf einem Hohlwellenbereich 82 der Buchse 8 angeordnet. Dies hat ferner den Vorteil, dass das Kühlmedium auch in den Bereich des Metallbalges 10 an der ersten Gleitringdichtung 2 gelangen kann. Das Fördergewinde 7 ist an einem Befestigungsbereich 81 der Buchse 8 vorgesehen, welcher mit der Drehhülse 9 verbunden ist.

Die Tesla-Pumpe 6 weist zwar eine gewisse Abmessung in radialer Richtung auf, jedoch ist sie dennoch sehr kompakt hinsichtlich ihrer Abmessung, so dass sie problemlos in verschiedenste Einbausituationen von Gleitringdichtungsanordnungen eingebaut werden kann, da üblicherweise in radialer Richtung der Gleitringdichtungsanordnungen aufgrund des stationären Bauteils ein notwendiger Einbauraum vorhanden ist. Eine axiale Länge L1 der Tesla-Pumpe ist dabei gleich wie eine axiale Länge L2 des Fördergewindes 7 (vgl. Fig. 2). Weiterhin ist das Fördergewinde 7 und die Tesla-Pumpe 6 in axialer Richtung X-X zwischen den beiden Dichtspalten 23, 33 der beiden Gleitringdichtungen 2, 3 angeordnet.

Somit kann durch die erfindungsgemäße Idee der Integration einer Tesla-Pumpe 6 in eine Gleitringdichtungsanordnung eine verbesserte Förderung von Medium, welches zur Kühlung oder zum Sperren der Gleitringdichtungen und von daran angrenzenden Bauteilen verwendet wird, sichergestellt werden, ohne dass dadurch ein großer Bauraum notwendig ist. Dabei ist die Tesla-Pumpe sehr robust und kann sehr kostengünstig hergestellt werden, insbesondere da sie keine kostspieligen Bauteile, wie Schaufeln oder dgl., benötigt. Die Integration der Tesla-Pumpe 6 ermöglicht es ferner, dass auf eine externe Fördereinrichtung, wie z.B. eine Kreiselpumpe oder dgl., zur Förderung des Kühlfluidstromes, verzichtet werden kann.

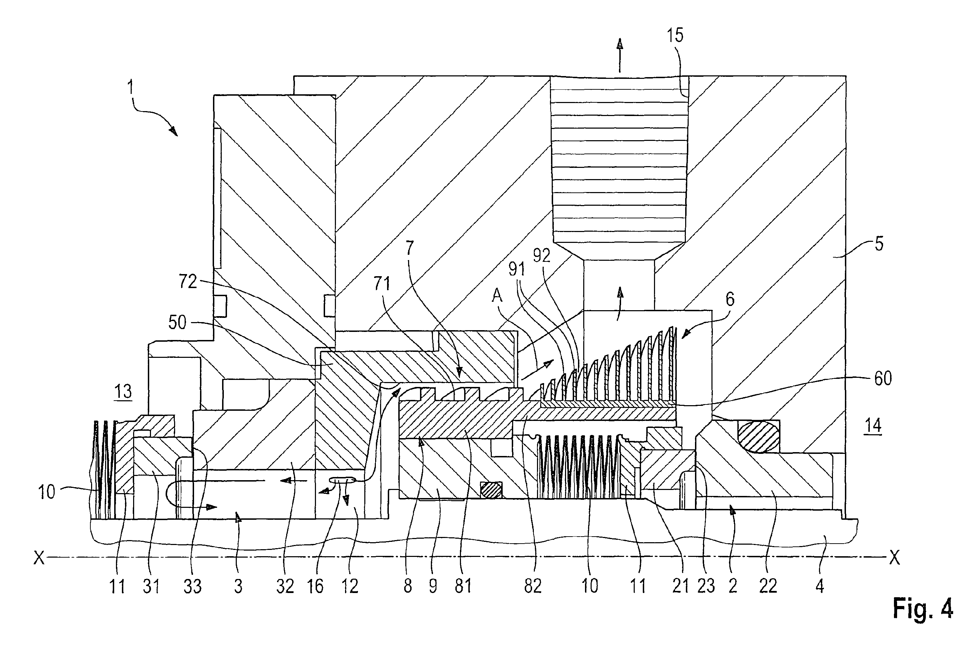

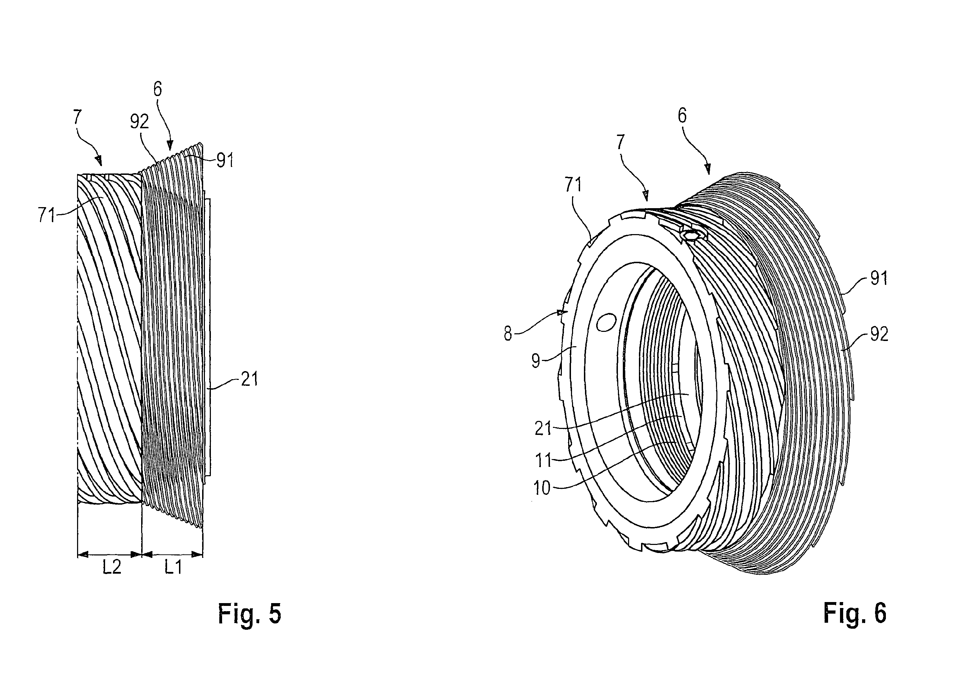

Ein zweites Ausführungsbeispiel der Erfindung wird nachfolgend unter Bezugnahme auf die Fig. 4 bis 6 beschrieben, wobei gleiche bzw. funktionalgleiche Teile mit den gleichen Bezugszeichen wie im ersten Ausführungsbeispiel bezeichnet sind. Das zweite Ausführungsbeispiel weist im Wesentlichen den gleichen Aufbau auf, wobei im Unterschied zum ersten Ausführungsbeispiel die Tesla-Pumpe 6 anders aufgebaut ist. Wie insbesondere aus den Fig. 4 und 5 ersichtlich ist, weist die Tesla-Pumpe 6 wieder einen zylindrischen Basisbereich 60 und eine Vielzahl von Scheiben 91 mit zwischen den Scheiben vorgesehenen definierten Zwischenräumen 92 auf. Allerdings sind die Scheiben 91 der Tesla-Pumpe 6 des zweiten Ausführungsbeispiels derart aufgebaut, dass die Scheiben 91 spiralförmig verlaufen. Somit weisen die Scheiben 91 einen spiralförmigen Aufbau auf, so dass sich zwischen den Scheiben ein spiralförmiger Zwischenraum 92 ergibt. Dabei steigt der Durchmesser der Scheiben 91 in Strömungsrichtung A des Mediums an. Dadurch ergibt sich eine konische Hüllkurve für die Tesla-Pumpe. Weiterhin ist eine Dicke der Scheiben 91 derart bemessen, dass die Dicke kleiner ist als ein Zwischenraum 92 zwischen zwei benachbarten Scheiben 91. Hierdurch arbeitet die Tesla-Pumpe mit verstärkter Reibung, wodurch eine maximale Oberfläche für die sich ausbildenden Grenzschichten des Kühlmediums geboten wird. Ansonsten entspricht dieses Ausführungsbeispiel dem vorhergehenden Ausführungsbeispiel, so dass auf die dort gegebene Beschreibung verwiesen werden kann.

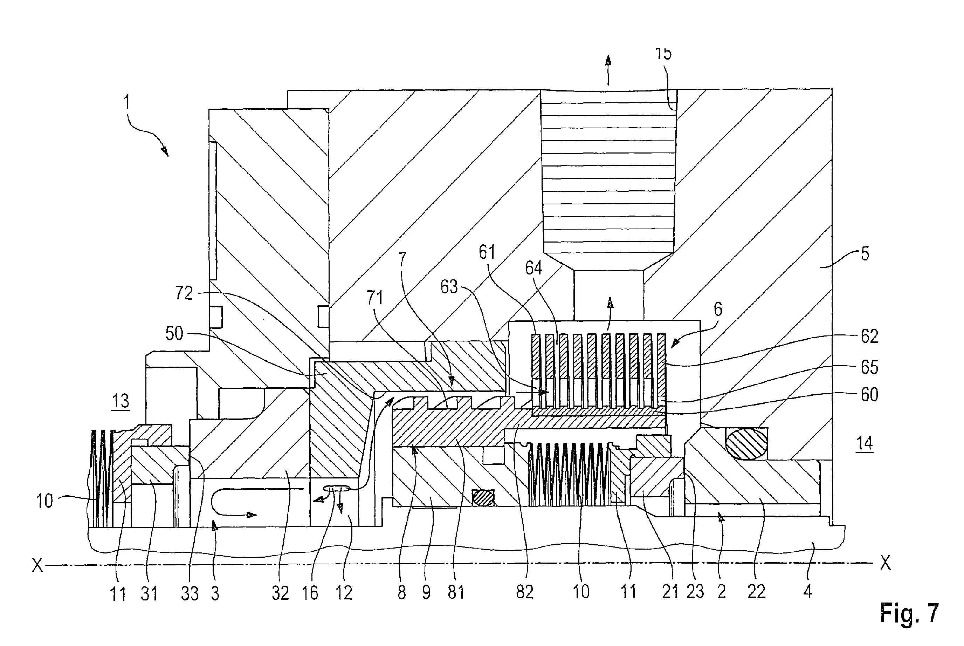

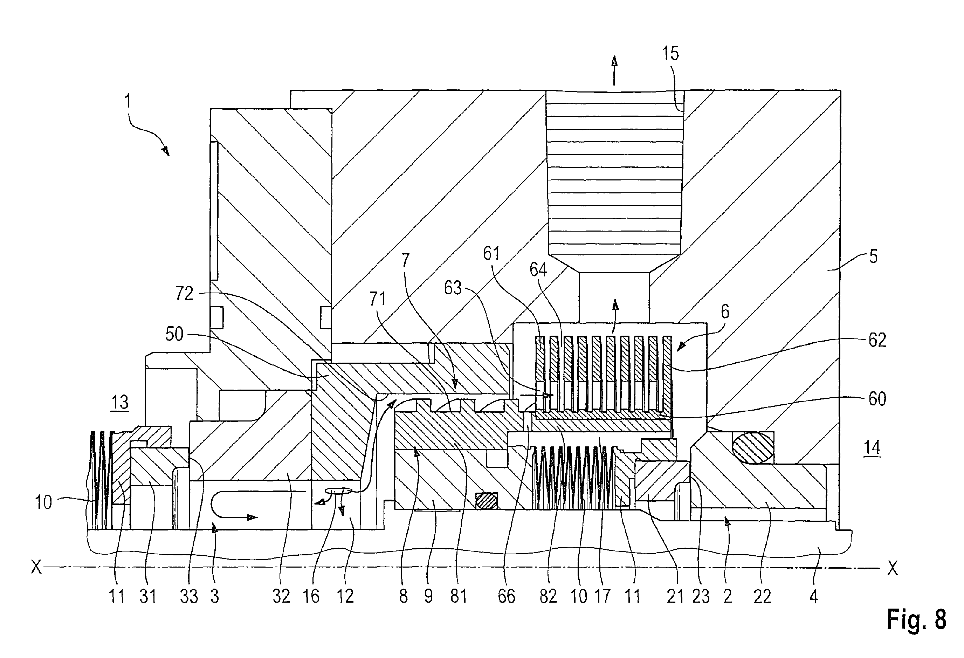

Die Fig. 7 und 8 zeigen jeweils ein weiteres Ausführungsbeispiel einer erfindungsgemäßen Gleitringdichtungsanordnung. Bei dem in Fig. 7 gezeigten dritten Ausführungsbeispiel weist die Tesla-Pumpe eine Vielzahl von Scheiben 61 auf, wobei jede der Scheiben 61 und insbesondere auch eine Endscheibe 62 an einem axialen Ende der Tesla-Pumpe eine Axialöffnung aufweist. Dabei ist eine Axialöffnung 65 der Endscheibe 62 kleiner, d.h. ein Durchtrittsquerschnitt ist kleiner als ein Durchtrittsquerschnitt der anderen Axialöffnungen 63 in den Scheiben 61, welcher jeweils gleich groß ist. Das in Fig. 8 gezeigte vierte Ausführungsbeispiel entspricht im Wesentlichen dem ersten Ausführungsbeispiel, wobei im Hohlwellenbereich 82 eine radiale Durchtrittsöffnung 66 ausgebildet ist. Vorzugsweise wird entlang des Umfangs des Hohlwellenbereichs 82 dabei eine Vielzahl von Durchtrittsöffnungen vorgesehen. Wie aus Fig. 8 ersichtlich ist, sind die Durchtrittsöffnungen 66 in axialer Richtung zwischen der Tesla-Pumpe 6 und dem Fördergewinde 7 vorgesehen. Über die Durchtrittsöffnung 66 wird eine Verbindung zu einem Raum 17 im Inneren des Hohlwellenbereichs 82 hergestellt. Wie aus Fig. 8 ersichtlich ist, mündet der Raum nahe dem Dichtspalt 23 der beiden Gleitringe 21, 22. Hierdurch wird ein Fluidstrom zur Kühlung der Gleitringe 21, 22 erhalten, welcher von einem Bereich nach dem Fördergewinde 7 durch die radiale Durchtrittsöffnung 66 abzweigt und über dem Raum 17 zu den Gleitringen geführt wird.

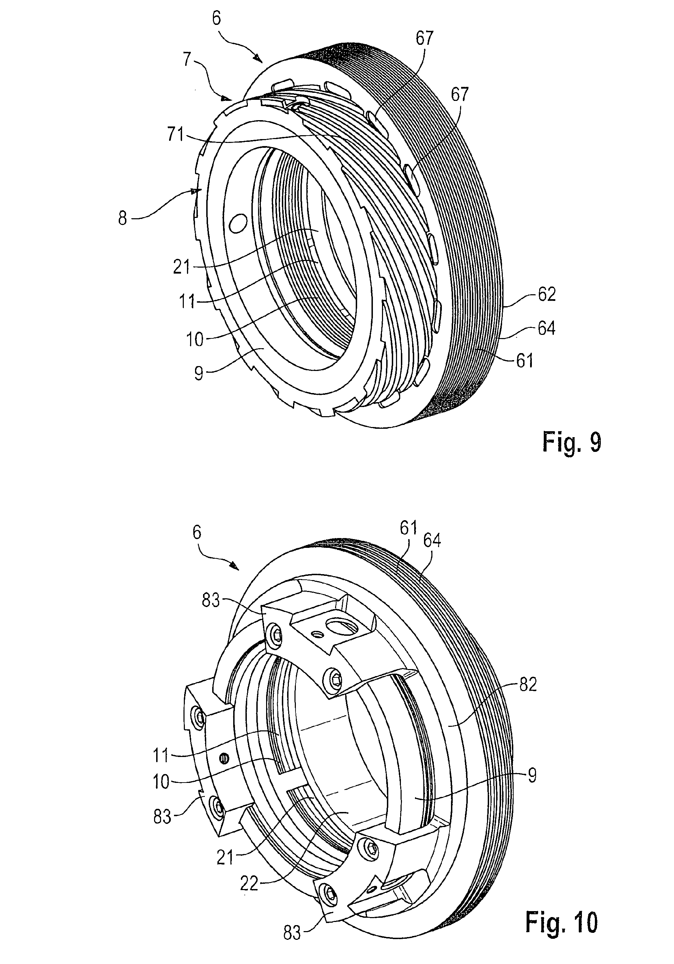

Fig. 9 zeigt eine weitere bevorzugte alternative Ausgestaltung, bei der statt der Axialöffnungen 63 in Form von zylindrischen Bohrungen Langlöcher 67 vorgesehen sind. Hierdurch kann ein Fluidstrom durch die Scheiben der Tesla-Pumpe 6 vergrößert werden. Die Langlöcher können dabei geradlinig oder auch bogenförmig entsprechend dem Außenradius an dem Fördergewinde 7 gebildet sein.

Fig. 10 zeigt eine Tesla-Pumpe 6 für eine Gleitringdichtungsanordnung gemäß einem sechsten Ausführungsbeispiel der Erfindung, bei der keine zusätzliche Fördervorrichtung vorgesehen ist. D.h., bei diesem Ausführungsbeispiel erfolgt eine Förderung des Mediums ausschließlich mittels der Tesla-Pumpe 6. Die Tesla-Pumpe 6 ist über einen Hohlwellenbereich 82 und drei breite Stege 83 an der nicht dargestellten Welle fixiert. Dieses Ausführungsbeispiel ist somit besonders kostengünstig herstellbar, da auf eine zweite Fördervorrichtung verzichtet werden kann. Ferner ist durch den Verzicht auf eine zweite Fördereinrichtung insbesondere eine in Axialrichtung kompakte und kurze Bauform möglich. Durch den in Umfangsrichtung relativ breiten Zwischenraum zwischen den Stegen 83 wird ferner eine verbesserte Mediumszuführung zur Tesla-Pumpe 6 erreicht.

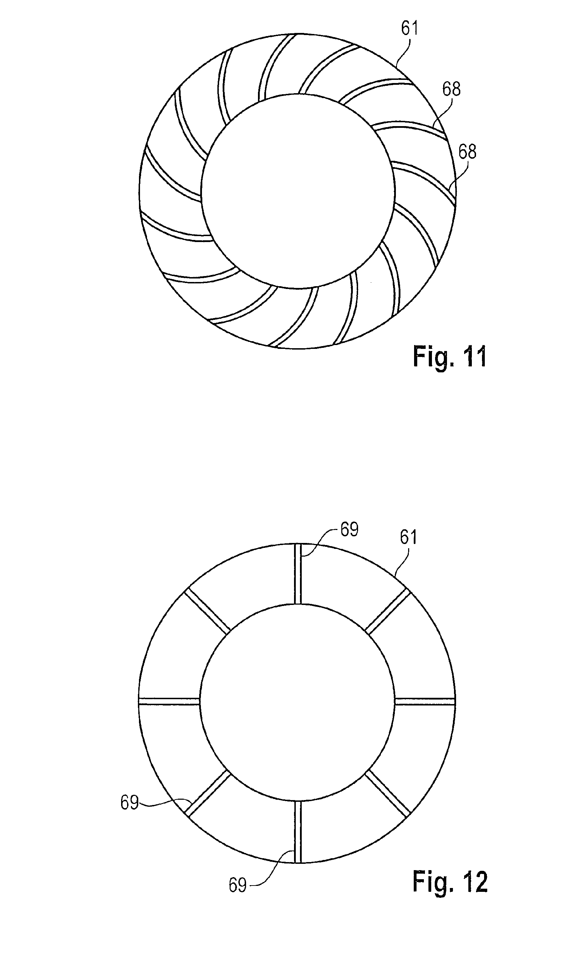

Die Fig. 11 und 12 zeigen zwei weitere alternative Ausführungsbeispiele von Scheiben 61 der Tesla-Pumpe 6 in Draufsicht. An den Flachseiten der Scheibe 61 sind Förderstrukturen vorgesehen. Bei der Scheibe 61 von Fig. 11 sind bogenförmige, vorstehende Förderelemente 68 vorgesehen und bei dem in Fig. 12 gezeigten Ausführungsbeispiel sind radial verlaufende, vorstehende Förderelemente 69 vorgesehen. Die vorstehenden Förderelemente sind dabei jeweils gleich verteilt an den Flachseiten der Scheibe 61 ausgebildet. Es sei angemerkt, dass die Förderstrukturen sowohl nur an einer Seite der Scheiben als auch alternativ an beiden Seiten der Scheibe vorgesehen sein können. Eine Höhe der vorstehenden Förderstrukturen ist dabei derart gewählt, dass trotz der vorstehenden Förderstrukturen ein relativ kleiner Zwischenraum 64 zwischen bei benachbarten Scheiben 61 vorhanden ist und die Förderstrukturen die Förderleistung der Tesla-Pumpe 6 erhöhen. Die in den Fig. 11 und 12 gezeigten Förderstrukturen können dabei bei allen beschriebenen Ausführungsbeispielen verwendet werden. Ferner sei angemerkt, dass die Förderstrukturen auch durch Vorsehen von Kanälen oder dgl. gebildet sein können.

### Bezugszeichenliste

- 1: Gleitringdichtungsanordnung
- 2: erste Gleitringdichtung
- 3: zweite Gleitringdichtung
- 4: Welle
- 5: Gehäuse
- 6: Tesla-Pumpe
- 7: Fördergewinde
- 8: Buchse
- 9: Drehhülse
- 10: Faltenbalg
- 11: Haltering
- 12: Zwischenraum
- 13: Produktseite
- 14: Atmosphärenseite
- 15: Abströmbohrung
- 16: Zuströmbohrung
- 17: Raum
- 21: rotierender Gleitring
- 22: stationärer Gleitring
- 23: Dichtspalt
- 31: rotierender Gleitring
- 32: stationärer Gleitring
- 33: Dichtspalt
- 50: Gehäusebauteil
- 60: zylindrischer Basisbereich
- 61: Scheibe
- 62: Endscheibe
- 63: Axialöffnung
- 64: Zwischenraum
- 65: Axialöffnung in Endscheibe
- 66: radiale Durchtrittsöffnung
- 67: Langloch
- 68, 69: vorstehendes Förderelement
- 71: Nuten
- 72: Gegenfläche des Fördergewindes
- 81: Befestigungsbereich
- 82: Hohlwellenbereich
- 83: Stege
- 91: spiralförmige Scheiben
- 92: spiralförmiger Zwischenraum
- A: Strömungsrichtung
- L1: axiale Länge der Tesla-Pumpe
- L2: axiale Länge des Fördergewindes

## Patentansprüche

1. Gleitringdichtungsanordnung, umfassend:
- wenigstens eine Gleitringdichtung (2) mit einem rotierenden Gleitring (21) und einem stationären Gleitring (22), wobei der rotierende Gleitring (21) und der stationäre Gleitring (22) zwischen sich einen Dichtspalt (23) definieren,
**gekennzeichnet durch**
- eine Tesla-Pumpe (6) zur Förderung eines Sperr- und/oder Kühlmediums der Gleitringdichtung, welche gemeinsam mit dem rotierenden Gleitring (21) rotiert.

2. Anordnung nach Anspruch 1, ferner umfassend eine zusätzliche Fördervorrichtung (7), welche der Tesla-Pumpe (6) vorgeschaltet ist.

3. Anordnung nach Anspruch 2, **dadurch gekennzeichnet, dass** die zusätzliche Fördervorrichtung (7) ein Fördergewinde umfasst, welches gemeinsam mit der Tesla-Pumpe (6) rotiert.

4. Anordnung nach Anspruch 3, **dadurch gekennzeichnet, dass** das Fördergewinde schräge Fördernuten (71) aufweist, welche zu einer Axialrichtung (X-X) der Anordnung schräg gestellt sind.

5. Anordnung nach einem der vorhergehenden Ansprüche, **dadurch gekennzeichnet, dass** die Tesla-Pumpe (6) eine Vielzahl von Scheiben (61) und einen zylindrischen Basisbereich (60) aufweist.

6. Anordnung nach Anspruch 5, **dadurch gekennzeichnet, dass** die Scheiben (61) vom zylindrischen Basisbereich (60) radial nach außen verlaufen, wobei wenigstens eine der Scheiben (61) wenigstens eine Axialöffnung (63) aufweist.

7. Anordnung nach Anspruch 6, **dadurch gekennzeichnet, dass**
- alle Scheiben (61) außer einer Endscheibe (62), welche an einem axialen Ende der Tesla-Pumpe (6) angeordnet ist, wenigstens eine Axialöffnung (63) aufweisen, oder
- dass alle Scheiben der Tesla-Pumpe wenigstens eine Axialöffnung aufweisen, wobei insbesondere eine Axialöffnung (65) in der Endscheibe (62) einen kleineren Durchschnittsquerschnitt als die Axialöffnung (63) der anderen Scheiben aufweist.

8. Anordnung nach einem der Ansprüche 5 bis 7, **dadurch gekennzeichnet, dass** die Axialöffnungen (63) zylindrisch sind und/oder dass die Axialöffnungen (63) als Langloch (67) ausgebildet sind und/oder dass die Axialöffnungen (63) entlang des Umfanges der Scheiben (61) gleich verteilt sind.

9. Anordnung nach einem der Ansprüche 5 bis 8, **dadurch gekennzeichnet, dass** Axialöffnungen (63) einander benachbarter Scheiben (61) der Tesla-Pumpe (6) an gleichen Umfangspositionen der Scheiben (61) angeordnet sind.

10. Anordnung nach einem der Ansprüche 5 bis 9, **dadurch gekennzeichnet, dass** die Scheiben (61) der Tesla-Pumpe (6) an wenigstens einer Flachseite, insbesondere an beiden Flachseiten, Förderstrukturen (68, 69) aufweisen.

11. Anordnung nach einem der vorhergehenden Ansprüche, **dadurch gekennzeichnet, dass** die Scheiben derart angeordnet sind, dass sich ein Außenumfang der Tesla-Pumpe (6) erweitert, insbesondere konisch erweitert.

12. Anordnung nach Anspruch 11, **dadurch gekennzeichnet, dass** die Scheiben (91) spiralförmig am zylindrischen Basisbereich (60) angeordnet sind.

13. Anordnung nach einem der Ansprüche 5 bis 12, **dadurch gekennzeichnet, dass** der zylindrische Basisbereich (60) als Hohlzylinder ausgebildet ist und insbesondere im Basisbereich (60) wenigstens eine Durchtrittsöffnung (66) vorgesehen ist.

14. Anordnung nach einem der Ansprüche 3 bis 13, **dadurch gekennzeichnet, dass** das Fördergewinde an einer Außenseite einer Buchse (8) angeordnet ist.

15. Anordnung nach Anspruch 14, **dadurch gekennzeichnet, dass** die Buchse (8) einen Befestigungsbereich (81) und einen Hohlwellenbereich (82) umfasst, wobei das Fördergewinde am Befestigungsbereich (81) angeordnet ist und die Tesla-Pumpe am Hohlwellenbereich (82) angeordnet ist.

16. Anordnung nach einem der vorhergehenden Ansprüche, ferner umfassend eine zweite Gleitringdichtung (3), wobei die Tesla-Pumpe (6) in Axialrichtung (X-X) zwischen dem Dichtspalt (23) der ersten Gleitringdichtung (2) und einem Dichtspalt (33) der zweiten Gleitringdichtung (3) angeordnet ist.

## Claims

1. A mechanical seal assembly, comprising:
- at least one mechanical seal (2) with a rotating seal ring (21) and a stationary seal ring (22), the rotating seal ring (21) and the stationary seal ring (22) defining a sealing gap (23) between them,
**characterized by**
- a Tesla pump (6) for delivering a barrier and/or cooling medium of the mechanical seal, which is co-rotating with the rotating seal ring (21).

2. The assembly according to claim 1, further comprising an additional delivery device (7) which is arranged upstream of the Tesla pump (6).

3. The assembly according to claim 2, **characterized in that** the additional delivery device (7) comprises a delivery thread which is co-rotating with the Tesla pump (6).

4. The assembly according to claim 3, **characterized in that** the delivery thread comprises oblique delivery grooves (71) which are inclined relative to an axial direction (X-X) of the assembly.

5. The assembly according to any one of the preceding claims, **characterized in that** the Tesla pump (6) comprises a plurality of discs (61) and a cylindrical base portion (60).

6. The assembly according to claim 5, **characterized in that** the discs (61) extend from the cylindrical base portion (60) radially to the outside, at least one of the discs (61) comprising at least one axial opening (63).

7. The assembly according to claim 6, **characterized in that**
- all discs (61), except for an end disc (62) arranged at an axial end of the Tesla pump (6), comprise at least one axial opening (63), or
- that all discs of the Tesla pump comprise at least one axial opening, particularly an axial opening (65) in the end disc (62) having a smaller average cross-section than the axial opening (63) of the other discs.

8. The assembly according to any one of claims 5 to 7, **characterized in that** the axial openings (63) are cylindrical and/or that the axial openings (63) are formed as an elongated hole (67) and/or that the axial openings (63) are evenly distributed along the circumference of the discs (61).

9. The assembly according to any one of claims 5 to 8, **characterized in that** axial openings (63) of adjacent discs (61) of the Tesla pump (6) are arranged at the same circumferential positions of the discs (61).

10. The assembly according to any one of claims 5 to 9, **characterized in that** the discs (61) of the Tesla pump (6) comprise delivery structures (68, 69) on at least one flat side, particularly on both flat sides.

11. The assembly according to any one of the preceding claims, **characterized in that** the discs are arranged such that an outer circumference of the Tesla pump (6) expands, particularly expands conically.

12. The assembly according to claim 11, **characterized in that** the discs (91) are spirally arranged on the cylindrical base portion (60).

13. The assembly according to any one of claims 5 to 12, **characterized in that** the cylindrical base portion (60) is configured as a hollow cylinder and at least one passage opening (66) is provided particularly in the base portion (60).

14. The assembly according to any one of claims 3 to 13, **characterized in that** the delivery thread is arranged on an outside of a bushing (8).

15. The assembly according to claim 14, **characterized in that** the bushing (8) comprises a fastening portion (81) and a hollow shaft portion (82), the delivery thread being arranged on the fastening portion (81) and the Tesla pump being arranged on the hollow shaft portion (82).

16. The assembly according to any one of the preceding claims, further comprising a second mechanical seal (3), the Tesla pump (6) being arranged in axial direction (X-X) between the sealing gap (23) of the first mechanical seal (2) and a sealing gap (33) of the second mechanical seal (3).

## Revendications

1. Agencement d'étanchéité à bague glissante, comprenant :
- au moins un joint d'étanchéité à bague glissante (2) doté d'une bague glissante rotative (21) et d'une bague glissante stationnaire (22), la bague glissante rotative (21) et la bague glissante stationnaire (22) définissant entre elles une fente d'étanchéité (23),
**caractérisé par**
- une pompe Tesla (6) pour faire circuler un fluide de barrière ou de refroidissement du joint d'étanchéité à bague glissante, laquelle tourne conjointement avec la bague glissante rotative (21).

2. Agencement selon la revendication 1, comprenant en outre un dispositif de transport supplémentaire (7) qui est placé en amont de la pompe Tesla (6).

3. Agencement selon la revendication 2, **caractérisé en ce que** le dispositif de transport supplémentaire (7) comprend un filetage de transport qui tourne conjointement avec la pompe Tesla (6).

4. Agencement selon la revendication 3, **caractérisé en ce que** le filetage de transport présente des rainures de transport inclinées (71) qui sont inclinées par rapport à une direction axiale (X-X) de l'agencement.

5. Agencement selon l'une des revendications précédentes, **caractérisé en ce que** la pompe Tesla (6) présente une pluralité de disques (61) et une zone de base cylindrique (60).

6. Agencement selon la revendication 5, **caractérisé en ce que** les disques (61) s'étendent radialement vers l'extérieur depuis la zone de base cylindrique (60), au moins un des disques (61) présentant au moins une ouverture axiale (63).

7. Agencement selon la revendication 6, **caractérisé en ce que**
- tous les disques (61), sauf un disque d'extrémité (62) qui est disposé à une extrémité axiale de la pompe Tesla (6), présentent au moins une ouverture axiale (63), ou
- que tous les disques de la pompe Tesla présentent au moins une ouverture axiale, une ouverture axiale (65) dans le disque d'extrémité (62) présentant en particulier une section moyenne plus petite que l'ouverture axiale (63) des autres disques.

8. Agencement selon l'une des revendications 5 à 7, **caractérisé en ce que** les ouvertures axiales (63) sont cylindriques et/ou que les ouvertures axiales (63) sont réalisées sous forme de trou oblong (67) et/ou que les ouvertures axiales (63) sont régulièrement réparties le long de la circonférence des disques (61).

9. Agencement selon l'une des revendications 5 à 8, **caractérisé en ce que** des ouvertures axiales (63) de disques (61) adjacents de la pompe Tesla (6) sont disposées aux mêmes positions sur la circonférence des disques (61).

10. Agencement selon l'une des revendications 5 à 9, **caractérisé en ce que** les disques (61) de la pompe Tesla (6) présentent des structures de transport (68, 69) sur au moins un côté plat, en particulier sur les deux côtés plats.

11. Agencement selon l'une des revendications précédentes, **caractérisé en ce que** les disques sont disposés de façon qu'une circonférence extérieure de la pompe Tesla (6) s'élargisse, en particulier s'élargisse en cône.

12. Agencement selon la revendication 11, **caractérisé en ce que** les disques (91) sont disposés en spirale sur la zone de base cylindrique (60).

13. Agencement selon l'une des revendications 5 à 12, **caractérisé en ce que** la zone de base cylindrique (60) est réalisée sous la forme d'un cylindre creux et en particulier au moins une ouverture de passage (66) est prévue dans la zone de base (60).

14. Agencement selon l'une des revendications 3 à 13, **caractérisé en ce que** le filetage de transport est disposé sur un côté extérieur d'une douille (8).

15. Agencement selon la revendication 14, **caractérisé en ce que** la douille (8) comprend une zone de fixation (81) et une zone d'arbre creux (82), le filetage de transport étant disposé sur la zone de fixation (81) et la pompe Tesla sur la zone d'arbre creux (82).

16. Agencement selon l'une des revendications précédentes, comprenant en outre un deuxième joint d'étanchéité à bague glissante (3), la pompe Tesla (6) étant disposée dans la direction axiale (X-X) entre la fente d'étanchéité (23) du premier joint d'étanchéité à bague glissante (2) et une fente d'étanchéité (33) du deuxième joint d'étanchéité à bague glissante (3).
